# EUROPÄISCHE PATENTSCHRIFT

(11) **EP 1 180 529 B1**
(45) Veröffentlichungstag und Bekanntmachung des Hinweises auf die Patenterteilung: **20.11.2002**
(21) Anmeldenummer: 01117684.9
(22) Anmeldetag: 26.07.2001
(51) Int. Cl.: C08F 8/28

(54) **Verwendung von acetalisierten Vinylalkoholpolymerisaten als Verdickungsmittel**
Use of acetalized vinyl alcohol polymers as thickening agents
Utilisation de polymères d'alcool vinylique acétalisés comme agents épaississants

(30) Priorität: 17.08.2000 DE 10040171
(43) Veröffentlichungstag der Anmeldung: 20.02.2002
(73) Patentinhaber: Wacker-Chemie GmbH, 81737 München (DE)
(72) Erfinder: Kayser, Bernd, Dr., 84489 Burghausen (DE); Bacher, Andreas, Dr., 84489 Burghausen (DE); Bauer, Werner, Dr., 84543 Winhöring (DE); Dietrich, Ulf, Dr., 84503 Altötting (DE); Schmitz, Marion, Dr., 84489 Burghausen (DE); Zeh, Harald, Dr., 84489 Burghausen (DE); Mayer, Theo, Dr., 84387 Julbach (DE)
(74) Vertreter: Schuderer, Michael, Dr.

(56) Entgegenhaltungen:
- EP-A- 0 220 491
- EP-A- 0 272 012
- EP-A- 0 477 900
- US-A- 2 501 990
- US-A- 5 565 027
- DATABASE WPI Section Ch, Week 7522 Derwent Publications Ltd., London, GB; Class A93, AN 1975-37058W XP002180788 & SU 430 111 A (CEMENT IND. RES. INST.), 7. Januar 1975 (1975-01-07)
- CHEMICAL ABSTRACTS, vol. 88, no. 12, 20. März 1978 (1978-03-20) Columbus, Ohio, US; abstract no. 75032n, Seite 36; Spalte 1; XP002180787 & JP 77 057256 A (DENKI KAGAKU KOGYO K.K.)
- DATABASE WPI Section Ch, Week 9921 Derwent Publications Ltd., London, GB; Class A14, AN 1999-248344 XP002180789 & JP 11 071150 A (KURARAY CO., LTD.), 16. März 1999 (1999-03-16)

## Beschreibung

Die Erfindung betrifft die Verwendung von acetalisierten Vinylalkoholpolymerisaten als Verdickungsmittel, insbesondere in Baustoffmassen.

Rheologische Hilfsmittel werden in der Bauindustrie standardmäßig eingesetzt. Sie dienen hauptsächlich zur Verbesserung der Verarbeitungs- und Wasserretentionseigenschaften. Weiterhin kann man mit solchen Zusatzstoffen das Eigenschaftsprofil auf ein gewünschtes Anwendungsprofil angleichen. Als verdickende Additive werden hauptsächlich wässerlösliche Polymere auf Basis von nichtionischen Celluloseethern wie Methylcellulose, Hydroxyethylcellulose, Methylhydroxyethylcellulose, Hydroxypropylcellulose eingesetzt. In den Rohstoffkosten beispielsweise eines zementären Bauklebers nimmt der Celluloseether, trotz der niedrigen Einsatzmengen, nach dem Redispersionspulver und dem Zement die drittgrößte Kostenposition ein. Die technische Herstellung von Methylcellulosen erfolgt ausschließlich durch Umsetzung von Alkalicellulosen mit, toxikologisch nicht unbedenklichem, Methylchlorid in Gegenwart oder Abwesenheit von organischen Lösungsmitteln. Es folgen aufwendige Reinigungsschritte, etwa zur Entfernung von Natriumchlorid, welches im Baubereich zu Korrosionsproblemen führt.

Die Celluloseether konkurrieren als Verdicker insbesondere mit vollsynthetischen Polymeren wie Polyurethan-Assoziativverdickern, Polyacrylaten, Polyiminen, Polyamiden, sowie natürlichen Polymeren wie Agar-Agar, Tragant, Carageen, Gummi arabicum, Alginaten, Stärke, Gelatine und Casein. Für zementäre Systeme mit hohem pH-Wert und hohem Elektrolytgehalt gibt es zu Cellulosether mit Blick auf Verarbeitungs- und Wasserretentionsanforderungen bisher keine Alternative. Nachteilig bei Celluloseethern, insbesondere Hydroxyethyl-Methylcellulose, welche üblicherweise in zementären Bauanwendungen eingesetzt werden, ist allerdings die teilweise erhebliche Verzögerung des Zementabbindens. Polyvinylalkohole sind zwar als Bestandteile von zementären Massen bekannt, aber nur in relativ niedermolekularer Form, in der diese nicht verdickend wirken können. In höhermolekularer Form wäre zwar die verdickende Wirkung besser, problematisch ist dann aber die geringe Kaltwasserlöslichkeit und die damit einhergehenden schlechten Verarbeitungseigenschaften.

Aus der US-A 5565027 sind mit Hydroxyaldehyden modifizierte Polyvinylalkohole bekannt, welche als Zementverflüssiger in zementären Systemen eingesetzt werden. Die JP-A 11-71150 beschreibt mit unsubstituierten und substituierten Aldehyden acetalisierte Vinylalkohol-Homo- und -Mischpolymerisate als Additiv für Zementmassen zur Verbesserung deren Kompressionsfähigkeit. Zur Verbesserung der Adhäsion und der Oberflächeneigenschaften von dünnen Putzbeschichtungen wird in der JP-A 59-78963 vorgeschlagen, die zementhaltigen Putze mit Methylcellulose und einem Polyvinylalkohol, welcher mit hydrophoben und anionischen, hydrophilen Gruppen substituiert ist, zu versetzen. Die hydrophoben Gruppen werden dabei mittels Copolymerisation mit hydrophoben Comonomeren oder Acetalisierung mit aliphatischen Monoaldehyden, die hydrophilen Gruppen mittels Copolymerisation mit Vinylsulfonsäure bzw. Sulfonierung eingeführt. Die DE-A 3115601 beschreibt die Verwendung von acetoacetyliertem Polyvinylalkohol als Bindemittel in Beschichtungsmitteln und Klebemitteln, wobei zur Verbesserung der rheologischen Eigenschaften dieser Zusammensetzungen der Einsatz von herkömmlichen Verdickungsmitteln, beispielsweise Celluloseether empfohlen wird.

Der Erfindung lag die Aufgabe zugrunde, ein vollsynthetisches wasserlösliches Polymer zur Verfügung zu stellen, das in bautechnischen, insbesondere auch zementären, Formulierungen als Verdickungsmittel wirkt und hervorragende Verarbeitungs- und mechanische Eigenschaften erzeugt, ohne die obengenannten Nachteile aufzuweisen.

Gegenstand der Erfindung ist die Verwendung von acetalisierten Vinylalkoholpolymerisaten mit einem Molekulargewicht Mw von > 100000 als Verdickungsmittel, wobei die Verdickungsmittel erhalten werden durch Acetalisierung von teil- oder vollverseiften Vinylacetat-Homopolymerisaten oder von teil- oder vollverseiften Vinylacetat-Mischpolymerisaten, welche neben Vinylacetat-Einheiten noch Comonomereinheiten enthalten, welche sich von einem oder mehreren Comonomeren ableiten aus der Gruppe umfassend 1-Alkylvinylester mit C₁- bis C₅-Alkylrest von C₁bis C₅-Carbonsäuren, Allylester, Vinylester von alpha-verzweigten Carbonsäuren mit 5 bis 12 C-Atomen, Acrylsäureund Methacrylsäureester von C₁- bis C₁₈-Alkoholen.

Im allgemeinen beträgt der Hydrolysegrad der teilverseiften oder vollverseiften Vinylacetat-Homopolymerisate oder Vinylacetat-Mischpolymerisate 75 bis 100 Mol-%. Bei vollverseiften Vinylalkohol-Polymerisaten vorzugsweise von 97.5 bis 100 Mol-%, besonders bevorzugt von 98 bis 99.5 Mol-%. Bei teilverseiften Vinylalkohol-Polymerisaten vorzugsweise von 80 bis 95 Mol-%, besonders bevorzugt von 86 bis 90 Mol-%. Bei den Vinylacetat-Mischpolymerisaten beträgt der Anteil der genannten Comonomer-Einheiten 0.1 bis 50 Gew.-%, vorzugsweise 0.3 bis 15 Gew.-%, besonders bevorzugt 0.5 bis 6 Gew.-%, jeweils bezogen auf das Gesamtgewicht des Vinylacetat-Mischpolymerisats.

Bevorzugter 1-Alkylvinylester ist Isopropenylacetat. Bevorzugte Vinylester von alpha-verzweigten Carbonsäuren sind solche von alpha-verzweigten Carbonsäuren mit 9 bis 11 C-Atomen; besonders bevorzugt werden Vinylester von alpha-verzweigten Carbonsäuren mit 10 C-Atomen (VeoVa10, Handelsname der Fa. Shell). Bevorzugte Acrylsäure- und Methacrylsäureester sind solche von C₁- bis C₁₀-Alkoholen; besonders bevorzugt werden Methylacrylat, Ethylacrylat, 2-Ethylhexylacrylat und 2-Ethylhexylmethacrylat und Methylmethacrylat. Gegebenenfalls können noch 0.05 bis 2 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure, Crotonsäure und Maleinsäure; ethylenisch ungesättigte Carbonsäureamide und -nitrile, vorzugsweise Acrylamid und Acrylnitril; cyclische Carbonsäureamide wie N-Vinylpyrrolidon und N-Vinyl-ε-Caprolactam, ethylenisch ungesättigte Carbonsäureanhydride, vorzugsweise Maleinsäureanhydrid.

Besonders bevorzugt werden Vinylacetat-Mischpolymerisaten mit jeweils 0.3 bis 15 Gew.-% Isopropenylacetat oder Vinylestern von alpha-verzweigten Carbonsäuren mit 9 bis 11 C-Atomen, oder Methyl-, Ethyl- und Butylacrylat. Besonders bevorzugt werden auch solche mit 0.3 bis 15 Gew.-% Isopropenylacetat-Einheiten und 0.3 bis 15 Gew.-% Einheiten von Vinylestern von alpha-verzweigten Carbonsäuren mit 9 bis 11 C-Atomen. Schließlich werden noch besonders bevorzugt Vinylalkohol-Mischpolymerisate mit 0.5 bis 6 Gew.-% Isopropenylacetat und 0.5 bis 6 Gew.-% Vinylestern von alpha-verzweigten Carbonsäuren mit 10 C-Atomen (VeoVa10) und 0.5 bis 6 Gew.-% Methylacrylat; sowie Vinylalkohol-Mischpolymerisate mit 0.5 bis 6 Gew.-% Isopropenylacetat und 0.5 bis 6 Gew.-% 2-Ethylhexylmethacrylat und 0.5 bis 6 Gew.-% Methylacrylat.

Zur Acetalisierung werden die teil- oder vollverseiften Vinylacetat-Homo- oder -Mischpolymerisate mit aliphatischen oder aromatischen Aldehyden, mit vorzugsweise 1 bis 10 C-Atomen, umgesetzt, welche gegebenenfalls mit einem oder mehreren Substituenten aus der Gruppe umfassend Hydroxy-, Carboxyl- und Sulfonat-, Ammonium-, Aldehyd-Rest substituiert sein können. Gegebenenfalls können die Aldehyde auch in maskierter Form, beispielsweise als Halb- oder Vollacetal oder mit Schutzgruppe eingesetzt werden. Bevorzugt werden Formaldehyd, Acetaldehyd, Benzaldehyd, Glyoxylsäure und Glycerinaldehyd. Der Acetalisierungsgrad, das heißt die Besetzung der freien Hydroxylgruppen der verseiften Vinylacetatpolymerisate beträgt 0.5 bis 100 Mol-%, vorzugsweise 0.5 bis 70 Mol-%, besonders bevorzugt 0.5 bis 20 Mol-%.

Die Herstellung der Vinylacetat-Homo- und -Mischpolymerisate kann mittels bekannter Verfahren wie Substanz-, Lösungs-, Suspensions- oder Emulsionspolymerisation erfolgen. Die Lösungspolymerisation erfolgt vorzugsweise in alkoholischer Lösung, beispielsweise in Methanol, Ethanol und Isopropanol. Suspensions- und Emulsionspolymerisation werden in wässrigem Medium durchgeführt. Die Polymerisation wird bei einer Temperatur von vorzugsweise 5°C bis 90°C durchgeführt und durch Zugabe von, für das jeweilige Polymerisationsverfahren üblichen, Initiatoren radikalisch initiiert. Bei den Vinylacetat-Mischpolymerisaten werden die Vinylacetat-Einheiten durch Copolymerisation von Vinylacetat in das Copolymere eingeführt, wobei die Acetatreste, genauso wie die weiteren verseifbaren Monomereinheiten, in einem nachfolgenden Hydrolyseschritt verseift werden. Die Einstellung des Molekulargewichtes kann in bekannter Weise durch Zugabe von Regler, durch den Lösungsmittelgehalt, durch Variation der Initiatorkonzentration und durch Variation der Temperatur erfolgen. Nach Abschluß der Polymerisation wird gegebenenfalls Lösungsmittel abdestilliert oder das Polymer durch Filtration aus der wässrigen Phase isoliert.

Die Verseifung erfolgt in an sich bekannter Weise im Alkalischen oder Sauren unter Zugabe von Base oder Säure. Vorzugsweise wird das zu verseifende Vinylacetat-Polymer in Alkohol, beispielsweise Methanol, unter Einstellen eines Feststoffgehalts von 5 bis 50 % aufgenommen. Bevorzugt wird die Hydrolyse im Basischen durchgeführt, beispielsweise durch Zugabe von NaOH, KOH oder NaHCO₃. Das erhaltene Vinylalkohol-Homo- oder Mischpolymerisat kann aus dem Reaktionsgemisch durch Filtration oder Destillation des Lösungsmittelgemisches isoliert werden. Außerdem kann durch Zugabe von Wasser, vorteilhaft in Form von überhitztem Wasserdampf, während der Destillation der organischen Lösungsmittel eine wässrige Lösung erhalten werden.

Zur Acetalisierung werden die teil- oder vollverseiften Vinylacetat-Homo- oder -Mischpolymerisate vorzugsweise in wässrigem Medium aufgenommen. Üblicherweise wird ein Festgehalt der wässrigen Lösung von 5 bis 30 % eingestellt. Die Acetalisierung erfolgt in Gegenwart von sauren Katalysatoren wie Salzsäure, Schwefelsäure oder Phosphorsäure. Vorzugsweise wird durch Zugabe von 20 %-iger Salzsäure der pH-Wert der Lösung auf Werte < 4 eingestellt.

Nach Zugabe des Katalysators wird die Acetalisierungsreaktion bei einer Temperatur von 0°C bis 100°C durch Zugabe des Aldehyds gestartet und für die Dauer von 1 bis 10 Stunden durchgeführt. Da die Acetalisierung mit fast vollständigem Umsatz abläuft kann die Zugabemenge durch einfache stöchiometrische Rechnung bestimmt werden. Mittels Zugabe von Base, vorzugsweise NaOH, wird der Ansatz anschließend neutralisiert, und das Produkt durch Eintropfen in ein Lösungsmittel, vorzugsweise Alkohole wie Methanol, als Feststoff gefällt. Die wässrige Lösung kann gegebenenfalls auch sprühgetrocknet werden. Anschließend wird mit einem Trocknungs- und Mahlschritt aufgearbeitet. Im allgemeinen wird bis zum Erhalt einer mittleren Korngröße von < 1 mm, vorzugsweise < 200 µm gemahlen.

Das Verdickungsmittel kann als wässrige Lösung oder in Pulverform, oder als Additiv in wässrigen Polymerdispersionen oder in Wasser redispergierbaren Polymerpulvern eingesetzt werden. Es kann allein oder im Gemisch mit weiteren Rheologieadditiven eingesetzt werden. Im allgemeinen wird das Verdickungsmittel in einer Menge von 0.01 bis 20 Gew.-% Verdickungsmittel (fest), bezogen auf das Gesamtgewicht der zu verdickenden Zusammensetzung, eingesetzt. Das Verdickungsmittel eignet sich zur Verwendung als Verdickungsmittel auf allen Gebieten in denen rheologische Hilfsmittel eingesetzt werden. Beispielsweise als Verdickungsmittel in Kosmetika, im pharmazeutischen Bereich, in wasserbasierenden Siliconemulsionen oder in Siliconölen, in Beschichtungsmittel-Zusammensetzungen wie Dispersionsfarben oder Textilbeschichtungen, als Verdickungsmittel in Klebstoff-Zusammensetzungen, und als Verdickungsmittel in Bauanwendungen sowohl in hydraulisch abbindenden als auch nicht hydraulisch abbindenden Zusammensetzungen wie Beton, Zementmörtel, Kalkmörtel, Gipsmörtel. Möglich sind auch Anwendungen in wasserhaltigen Rezepturen in denen auch Celluloseether und Stärkeether als Verdickungsmittel eingesetzt werden. Besonders bevorzugt sind die Bauanwendungen. Ganz besonders bevorzugt sind zementäre Bauanwendungen wie zementäre Baukleber (Fliesenkleber), zementäre Trockenmörtel, zementäre Verlaufsmassen, zementäre Putze, zementäre Vollwärmeschutzkleber, zementäre Dichtungsschlämmen.

Typische Rezepturen für zementäre Baukleber enthalten 5 bis 80 Gew.-% Zement, 5 bis 80 Gew.-% Füllstoffe wie Quarzsand, Calciumcarbonat oder Talkum, 0.5 bis 60 Gew.-% Polymerdispersion oder Polymerpulver, sowie 0.1 bis 5 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%. Die genannten zementhaltigen Baukleberrezepturen fi-nden vor allem bei der Verlegung von Fliesen aller Art (Steingut, Steinzeug, Feinststeinzeug, Keramik, Naturfliesen) im Inner.- und Außenbereich als Fliesenkleber Verwendung und werden vor deren Verwendung noch mit der entsprechenden Menge Wasser angerührt.

Die erfindungsgemäßen Verdickungsmittel eignen sich auch zur Verwendung in zementfreien Baurezepturen, beispielsweise mit der entsprechenden Menge Gips oder Wasserglas als anorganischem Bindemittel; vorzugsweise in gipshaltigen Zusammensetzungen wie Gipsputzen und Gipsspachtelmassen. Die zementfreien Rezepturen finden vor allem in Spachtelmassen, Fliesenklebern, Vollwärmeschutzklebern, Putzen und Farben Verwendung. Typische Rezepturen für Gipsformulierungen enthalten 15 bis 96 Gew.-% Gips, 3 bis 80 Gew.-% Füllstoffe wie Quarzsand, Calciumcarbonat oder Talkum, 0 bis 5 Gew.-% Kalkhydrat, 0 bis 5 Gew.-% Polymerdispersion oder Polymerpulver, sowie 0.01 bis 3 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%.

In zementären Baumassen, beispielsweise Fliesenkleber, werden mit den erfindungsgemäßen Verdickungsmitteln auch ohne zusätzliche rheologische Additive, wie Methylhydroxyethylcellulose, hervorragende Verarbeitungs- und mechanische Eigenschaften der zementären Masse gefunden. Celluloseether konnten bisher in zementären Bauformulierungen nur teilweise, und unter erheblichem technischen Qualitätsverlust der Baumasse, beispielsweise durch Stärkeverdicker oder wasserlösliche Polyacrylate substituiert werden. Mit dem erfindungsgemäßen Verdickungsmittel können Celluloseether ohne Qualitätseinbußen in der zementären Anwendung bis zu 100 % ersetzt werden.

Die nachfolgenden Beispiele dienen zur weiteren Erläuterung der Erfindung.

### Beispiel 1:

In einer thermostatisierten Laborapparatur mit 2.5 Liter Füllvolumen wurden 1000 g einer 6.6 %- igen wässrigen Lösung von Polyvinylalkohol (Hydrolysegrad: 98 Mol-%) vorgelegt. Der Reaktor wurde auf 30°C temperiert und es wurde mit 10 %-iger Salzsäure auf pH = 3.5 gestellt. Über einen Zeitraum von 1 Stunde wurden 3.3 g Acetaldehyd zudosiert. Es wurde noch 2 Stunden bei dieser Temperatur gehalten, dann abgekühlt. Anschließend wurde mit 10 %-iger Natriumhydroxidlösung neutralisiert und die Lösung in einen grossen Überschuss von Methanol tropfenweise eingegossen, wobei das Vinylalkoholpolymer als Niederschlag ausfiel.
Es wurde ein teilacetalisierter (10 Mol-% bezogen auf OH-Gruppen) Polyvinylalkohol erhalten, welcher als Lösung oder in Pulverform eingesetzt werden kann.

### Beispiel 2:

Beispiel 1 wurde wiederholt, jedoch wurden 1.6 g Benzaldehyd (2 Mol-% bezogen auf OH-Gruppen) der Polyvinylalkohol-Lösung zugesetzt.

### Beispiel 3:

Beispiel 1 wurde wiederholt, jedoch wurden 5.5 g einer 50 %igen wässrigen Glyoxylsäurelösung (5 Mol-% bezogen auf OH-Gruppen) der Polyvinylalkohol-Lösung zugesetzt.

### Beispiel 4:

Beispiel 1 wurde wiederholt, jedoch wurden 7.26 g Glycerinaldehyd (10 Mol-% bezogen auf OH-Gruppen) der Polyvinylalkohol-Lösung zugesetzt.

### Vergleichsbeispiel 5:

Handelsübliche Hydroxyethylmethylcellulose mit einer Höppler-Viskosität von 6000 mPas (DIN 53015, 2 %-ige wässrige Lösung).

### Vergleichsbeispiel 6:

Handelsüblicher, vollverseifter Polyvinylalkohol mit einem Hydrolysegrad von 99.5 Mol-% und einem Molekulargewicht Mw von > 200000.

### Testung der Verdickungsmittel:

Die Prüfung der Verdickungsmittel wurde in folgender Formulierung durchgeführt:

| | |
|---|---|
| 55.2 | Gew.-Teile Quarzsand Nr.9a (0.1-0.4 mm), |
| 43.0 | Gew.-Teile Zement 42.5 (Rohrdorfer), |
| 1.5 | Gew.-Teile Redispersionspulver (Vinnapas RE 530 Z), |
| 0.7 | Gew.-Teile Verdickungsmittel, |

Die Trockenmischung wurde mit der in der Tabelle 1 angegebenen Menge Wasser versetzt, die Mischung 5 Minuten stehen gelassen und danach der Prüfung unterzogen.

### Testmethoden:

Die Testergebnisse sind in Tabelle 1 zusammengefaßt.

### Bestimmung der Geschmeidigkeit:

Die Geschmeidigkeit der Mischung wurde qualitativ mittels Rühren der Formulierung bestimmt. Die Bewertung erfolgte in einer Notenskala von 1 bis 6, wobei die Note 1 das Optimum darstellt.

### Bestimmung der Benetzung:

Zur Bestimmung der Benetzung wurde die Formulierung mit einer Zahntraufel auf eine Faserzementplatte aufgetragen, und die Benetzung der Platte qualitativ beurteilt. Die Bewertung erfolgte in einer Notenskala von 1 bis 6, wobei die Note 1 das Optimum darstellt.

### Bestimmung der Stegausbildung:

Die Formulierung wurde mit einer Zahntraufel auf eine Faserzementplatte aufgetragen, und die Qualität der dabei gebildeten Stege qualitativ beurteilt. Die Bewertung erfolgte in einer Notenskala von 1 bis 6, wobei die Note 1 das Optimum darstellt.

### Bestimmung der Wasserretention:

Die Bestimmung der Wasserretention wurde nach DIN 18555 Teil 7 vorgenommen. In Tabelle 1 ist der in der Formulierung verbliebene Wasseranteil angegeben.

### Bestimmung des Aufbruchs:

Die Fliesenkleberformulierung wurde auf eine Faserzementplatte appliziert und nach 20 Minuten eine Fliese (5 cm x 5 cm) aufgelegt, welche für 30 Sekunden mit einem Gewicht von 2 kg belastet wurde. Nach weiteren 60 Minuten wurde die Fliese abgenommen, und es wurde ermittelt zu welchem Prozentsatz die Fliesenrückseite noch mit Kleber behaftet ist.

### Bestimmung der Standfestigkeit (Abrutschtest):

Zum Abrutschtest wurde eine Fliese (15 x 15 cm) in die Fliesenkleberformulierung eingelegt, mit 5 kg für 30 Sekunden belastet und der Probenaufbau senkrecht gestellt. Anschließend wurde die Oberkante der Fliese für jeweils 30 Sekunden mit Gewichten belastet und festgestellt, bei welchem Gewicht die Fliese abrutscht.

### Bestimmung des Zementabbindeverhaltens:

Das Zementabbindeverhalten wurde in der Fliesenkleberformulierung mit einem Thermofühler bestimmt. Es wurde die Zeit bis zum Einsetzen des Abbindens bestimmt und relativ zu einer Verdickungsmittel-freien Formulierung das Verzögern (Werte > 100) bzw. das Beschleunigen des Abbindens (Werte < 100) bestimmt.

### Diskussion der Meßergebnisse:

Die Testergebnisse zeigen, dass das erfindungsgemäße Verdickungsmittel auf Basis der teilacetalisierten Vinylalkohol-Polymerisate (Beispiele 1 bis 4) gegenüber herkömmlichem Polyvinylalkohol (Vergleichsbeispiel 6) eine deutlich bessere Verarbeitbarkeit (Geschmeidigkeit, Benetzung, Stegausbildung) aufweist, eine wesentlich bessere verdickende Wirkung (Aufbruch, Wasserretention), und deutlich beschleunigtes Abbindeverhalten (Zementabbindung).
Gegenüber herkömmlichen Verdickungsmittel auf Basis von Celluloseethern (Vergleichsbeispiel 5) zeichnen sich die teilacetalisierten Vinylalkohol-Polymerisate durch eine deutlich bessere Verarbeitbarkeit (Geschmeidigkeit, Benetzung, Stegausbildung) und ein deutlich beschleunigtes Abbindeverhalten (Zementabbindung) aus.

**Tabelle 1:**

| **Beispiel** | **Wasser** | **Geschmeidigkeit** | **Benetzung** | **Stegausbildung** | **Aufbruch** | **Wasserretention** | **Abrutschen** | **Zementabbindung** |
|---|---|---|---|---|---|---|---|---|
| | (g) | | | - | (%) | (%) | (g) | (%) |
| **Bsp. 1** | 22.8 | 1 | 1 | 1.5 | 72 | 98.7 | 200 | 94 |
| **Bsp. 2** | 22.9 | 1 | 1 | 1.5 | 90 | 98.2 | 200 | 96 |
| **Bsp. 3** | 23.2 | 1 | 2 | 1 | 74 | 98.5 | 800 | 96 |
| **Bsp. 4** | 22.6 | 1 | 1 | 1 | 70 | 98.0 | 200 | 90 |
| **V.bsp. 5** | 23.0 | 2.5 | 2.5 | 1.5 | 98 | 98.5 | 200 | 185 |
| **V.bsp. 6** | 22.9 | 3.5 | 4.5 | 5 | 25 | 96.5 | 400 | 120 |

Die Testung der Verdickungsmittel in gipshaltigen Rezepturen (Gipsputzen) wurde in folgender Formulierung durchgeführt:

| | |
|---|---|
| Gips (Primoplast - Hilliges Gipswerk) | 700 g |
| Quarzsand (Nr.7; 0,2 - 0,7mm) | 237.6 g |
| Leichtfüllstoff Perlite (3 mm) | 25 g |
| Kalkhydrat (Walhalla) | 35 g |
| Verzögerer (Retardan, Aminobutyraldehyd-Kondensat) | 0.4 g |
| Verdickungsmittel | 2 g |

### Testmethoden:

Die Testergebnisse sind in Tabelle 2 zusammengefaßt.

### Bestimmung des Luftporengehalts:

Die Bestimmung des Luftporengehalts wurde nach DIN 18555 Teil 2 vorgenommen.

### Bestimmung der Wasserretention:

Die Bestimmung der Wasserretention wurde nach DIN 18555 Teil 7 vorgenommen.

### Geschmeidigkeit:

Die Geschmeidigkeit der Mischung wurde qualitativ mittels Rühren der Formulierung bestimmt. Die Bewertung erfolgte in einer Notenskala von 1 bis 6, wobei die Note 1 das Optimum darstellt.

### Standfestigkeit:

Die Standfestigkeit der Formulierung wurde qualitativ beim Durchfahren der Mischung mit einer Kelle beurteilt. Die Bewertung erfolgte in einer Notenskala von 1 bis 6, wobei die Note 1 das Optimum darstellt.

### Nachdicken:

Nach einer Rastzeit von 5 Minuten wurde qualitativ das Nachdicken der Formulierung beurteilt. Die Bewertung erfolgte in einer Notenskala von 1 bis 6, wobei die Note 1 das Optimum darstellt.

### Erstarrungsbeginn (EB), Erstarrungsende (EE) :

Die Zeit bis zum beginnenden Erstarren wurde mittels einer in die Formulierung wiederholt eintauchende Nadel bestimmt. Der Erstarrungsbeginn ist der Zeitpunkt, ab dem mit gleichem Kraftaufwand die Eintauchtiefe der Nadel geringer war. Nach dem Erstarrungsende war ein Eintauchen mit gleichem Kraftaufwand nicht mehr möglich.

### Filzzeit:

Die Formulierung wurde mit einer Kelle auf eine Ziegelwand aufgetragen und nach einer Wartezeit mit einer Holzlatte abgezogen. Anschließend wurde der Putz mit einem angefeuchteten Schwamm gefilzt. Die Filzzeit ist diejenige Zeit, ab der mit dem Filzen begonnen werden kann ohne dass der Putz aufreißt (gemessen ab dem Auftragen der Formulierung).

### Ausbreitmaß:

Die Formulierung wird in einen Setztrichter auf einem Ausbreittisch nach DIN 1060 Teil 3 eingefüllt und das Ausbreitmaß der Mischung 1 Minute nach Entfernen des Trichters sowie nach Rütteln der Probe mit 15 Schlägen gemessen.

### Schwinden:

Von der Mischung werden Probekörper angefertigt und mittels eines Messgerätes nach DIN 52450 die Längenänderung der Prismen in der Längsachse nach 28 Tagen ermittelt.

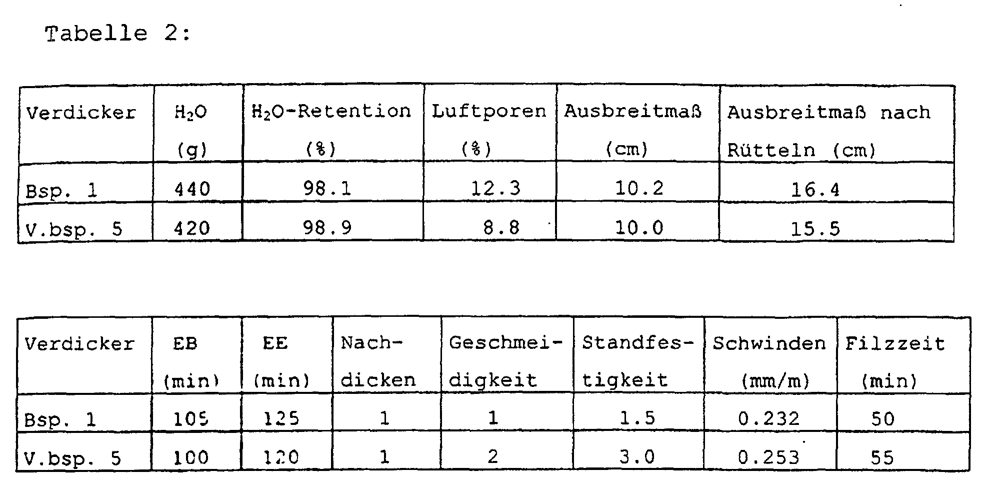

## Patentansprüche

1. Verwendung von acetalisierten Vinylalkoholpolymerisaten mit einem Molekulargewicht Mw von > 100000 als Verdickungsmittel, wobei die Verdickungsmittel erhalten werden durch Acetalisierung von teil- oder vollverseiften Vinylacetat-Homopolymerisaten oder von teil- oder vollverseiften Vinylacetat-Mischpolymerisaten, welche neben Vinylacetat-Einheiten noch Comonomereinheiten enthalten, welche sich von einem oder mehreren Comonomeren ableiten aus der Gruppe umfassend 1-Alkylvinylester mit C₁- bis C₅-Alkylrest von C₁- bis C₅-Carbonsäuren, Allylester, Vinylester von alpha-verzweigten Carbonsäuren mit 5 bis 12 C-Atomen, Acrylsäure- und Methacrylsäureester von C₁- bis C₁₈-Alkoholen.

2. Verwendung nach Anspruch 1, **dadurch gekennzeichnet, dass** teil- oder vollverseifte Vinylacetat-Homo- oder - Mischpolymerisate mit einem Hydrolysegrad von 75 bis 100 Mol-% verwendet werden, welche mit aliphatischen oder aromatischen Aldehyden mit einem Acetalisierungsgrad von 0.5 bis 100 Mol-% acetalisiert sind.

3. Verwendung nach Anspruch 1 oder 2, **dadurch gekennzeichnet, dass** die aliphatischen oder aromatischen Aldehyde mit einem oder mehreren Substituenten aus der Gruppe umfassend Hydroxy-, Carboxyl- und Sulfonat-, Ammonium-, Aldehyd-Rest substituiert sind.

4. Verwendung nach Anspruch 1 bis 3, **dadurch gekennzeichnet, dass** die teil- oder vollverseiften Vinylacetat-Homo- oder - Mischpolymerisate mit einem oder mehreren Aldehyden aus der Gruppe umfassend Formaldehyd, Acetaldehyd, Benzaldehyd, Glyoxylsäure und Glycerinaldehyd acetalisiert sind.

5. Verwendung nach Anspruch 1 bis 4, **dadurch gekennzeichnet, dass** in den teil- oder vollverseiften Vinylacetat-Mischpolymerisaten neben Vinylacetat-Einheiten noch Comonomereinheiten enthalten sind, welche sich von einem oder mehreren Comonomeren ableiten aus der Gruppe umfassend Isopropenylacetat, Vinylester von alpha-verzweigten Carbonsäuren mit 9 bis 11 C-Atomen, Acrylsäure- und Methacrylsäureester von C₁bis C₁₀-Alkoholen.

6. Verwendung nach Anspruch 5, **dadurch gekennzeichnet, dass** der Anteil der genannten Comonomer-Einheiten jeweils 0.3 bis 15 Gew.-% beträgt, jeweils bezogen auf das Gesamtgewicht des teil- oder vollverseiften Vinylacetat-Mischpolymerisats.

7. Verwendung nach Anspruch 6, **dadurch gekennzeichnet, dass** die Verdickungsmittel erhalten werden durch Acetalisierung von teil- oder vollverseiften Vinylacetat-Mischpolymerisaten, mit jeweils 0.3 bis 15 Gew.-% Isopropenylacetatoder Vinylester von alpha-verzweigten Carbonsäuren mit 9 bis 11 C-Atomen oder Methyl-, Ethyl-, Butylacrylat, 2-Ethylhexylacrylat und 2-Ethylhexylmethacrylat,
oder von teil- oder vollverseiften Vinylacetat-Mischpolymerisaten mit 0.3 bis 15 Gew.-% Isopropenylacetat-Einheiten und 0.3 bis 15 Gew.-% Vinylester von alpha-verzweigten Carbonsäuren mit 9 bis 11 C-Atomen,
oder von teil- oder vollverseiften Vinylacetat-Mischpolymerisaten mit 0.5 bis 6 Gew.-% Isopropenylacetat und 0.5 bis 6 Gew.-% Vinylester von alpha-verzweigten Carbonsäuren mit 10 C-Atomen, und 0.5 bis 6 Gew.-% Methylacrylat
oder von teil- oder vollverseiften Vinylacetat-Mischpolymerisaten mit 0.5 bis 6 Gew.-% Isopropenylacetat und 0.5 bis 6 Gew.-% 2-Ethylhexylmethacrylat, und 0.5 bis 6 Gew.-% Methylacrylat.

8. Verwendung nach Anspruch 1 bis 7, **dadurch gekennzeichnet, dass** die Verdickungsmittel als wässrige Lösung, oder in Pulverform, oder als Additiv in wässrigen Polymerdispersionen oder in Wasser redispergierbaren Polymerpulvern in einer Menge von 0.01 bis 20 Gew.-% Verdickungsmittel (fest), bezogen auf das Gesamtgewicht der zu verdickenden Zusammensetzung, in Kosmetika, im pharmazeutischen Bereich, in wasserbasierenden Siliconemulsionen, in Siliconölen, in Beschichtungsmittel-Zusammensetzungen, in Klebstoff-Zusammensetzungen, und in Bauanwendungen verwendet werden.

9. Verwendung nach Anspruch 8 in Bauanwendungen mit hydraulisch abbindenden und nicht hydraulisch abbindenden Zusammensetzungen.

10. Verwendung nach Anspruch 9 in zementären Bauklebern, zementären Trockenmörteln, zementären Verlaufsmassen, zementären Putzen, zementären Vollwärmeschutzkleber, zementären Dichtungsschlämmen.

11. Verwendung nach Anspruch 9 in zementfreien Spachtelmassen, Putzen, Fliesenklebern und Vollwärmeschutzklebern.

12. Verwendung nach Anspruch 11 in gipshaltigen Zusammensetzungen.

13. Verwendung nach Anspruch 12 in Gipsputzen und Gipsspachtelmassen.

14. Verwendung nach Anspruch 9 bis 13 im Gemisch mit in Wasser redispergierbaren Redispersionspulvern.

## Claims

1. Use of acetalized vinyl alcohol polymers with a molecular weight Mw > 100 000 as thickeners, the thickeners being obtained by acetalizing partially or fully hydrolysed vinyl acetate homopolymers or partially or fully hydrolysed vinyl acetate copolymers which, besides vinyl acetate units, also contain comonomer units which derive from one or more comonomers selected from the group consisting of 1-alkylvinyl esters, with a C₁-C₅-alkyl radical, of C₁-C₅ carboxylic acids, allyl esters, vinyl esters of alpha-branched carboxylic acids having from 5 to 12 carbon atoms, and C₁-C₁₈-alkyl (meth)acrylates.

2. Use according to Claim 1, **characterized in that** use is made of partially or fully hydrolysed vinyl acetate homo- or copolymers with a degree of hydrolysis of from 75 to 100 mol% which had been acetalized with aliphatic or aromatic aldehydes, with a degree of acetalization of from 0.5 to 100 mol%.

3. Use according to any of Claims 1 or 2, **characterized in that** the aliphatic or aromatic aldehydes have one or more substituents selected from the group consisting of the hydroxyl, carboxyl, sulphonate, ammonium, and aldehyde radicals.

4. Use according to any of Claims 1 to 3, **characterized in that** the partially or fully hydrolysed vinyl acetate homo- or copolymers have been acetalized with one or more aldehydes selected from the group consisting of formaldehyde, acetaldehyde, benzaldehyde, glyoxylic acid and glyceraldehyde.

5. Use according to any of Claims 1 to 4, **characterized in that** the partially or fully hydrolysed vinyl acetate copolymers contain, besides vinyl acetate units, comonomer units which derive from one or more comonomers selected from the group consisting of isopropenyl acetate, vinyl esters of alpha-branched carboxylic acids having from 9 to 11 carbon atoms, and C₁-C₁₀-alkyl (meth)acrylates.

6. Use according to Claim 5, **characterized in that** the proportion of the comonomer units mentioned is in each case from 0.3 to 15% by weight, based in each case on the total weight of the partially or fully hydrolysed vinyl acetate copolymer.

7. Use according to any of Claims 1 to 3, **characterized in that** the thickeners are obtained by acetalization of partially or fully hydrolysed vinyl acetate copolymers in each case having from 0.3 to 15% by weight of isopropenyl acetate, or vinyl esters of alpha-branched carboxylic acids having from 9 to 11 carbon atoms, or methyl, ethyl, butyl or 2-ethylhexyl acrylate, or 2-ethylhexyl methacrylate,
or of partially or fully hydrolysed vinyl acetate copolymers having from 0.3 to 15% by weight of isopropenyl acetate units and from 0.3 to 15% by weight of vinyl esters of alpha-branched carboxylic acids having from 9 to 11 carbon atoms,
or of partially or fully hydrolysed vinyl acetate copolymers having from 0.5 to 6% by weight of isopropenyl acetate and from 0.5 to 6% by weight of vinyl esters of alpha-branched carboxylic acids having 10 carbon atoms, and from 0.5 to 6% by weight of methyl acrylate,
or of partially or fully hydrolysed vinyl acetate copolymers having from 0.5 to 6% by weight of isopropenyl acetate and from 0.5 to 6% by weight of 2-ethylhexyl methacrylate, and from 0.5 to 6% by weight of methyl acrylate.

8. Use of the thickeners according to any of Claims 1 to 7, **characterized in that** the thickeners are used as an aqueous solution or in powder form, or as an additive in aqueous polymer dispersions or in water-redispersible polymer powders, in amounts of from 0.01 to 20% by weight of thickener (solid), based on the total weight of the composition to be thickened, in cosmetics, in the pharmaceutical sector, in water-based silicone emulsions, in silicone oils, in coating compositions, in adhesive compositions, or in construction applications.

9. Use according to Claim 8 in construction applications with hydraulically setting or non-hydraulically setting compositions.

10. Use according to Claim 9 in cement-type construction adhesives, cement-type dry mortars, cement-type flowable compositions, cement-type renders, cement-type exterior insulation system adhesives, or cement-type non-shrink grouts.

11. Use according to Claim 9 in cement-free troweling compositions, in renders, in tile adhesives, or in exterior insulation system adhesives.

12. Use according to Claim 11 in gypsum-containing compositions.

13. Use according to Claim 12 in gypsum renders or in gypsum troweling compounds.

14. Use according to any of Claims 9 to 13 in a mixture with water-redispersible redispersion powders.

## Revendications

1. Utilisation de polymères d'alcools vinyliques acétalisés présentant un poids moléculaire Mw > 100 000 en tant qu'épaississants, les épaississants étant obtenus par acétalisation d'homopolymères d'acétate de vinyle partiellement ou totalement hydrolysés ou de copolymères d'acétate de vinyle partiellement ou totalement hydrolysés, renfermant également, en plus de motifs acétate de vinyle, des motifs comonomères qui sont dérivés d'un ou de plusieurs comonomères parmi le groupe constitué d'esters 1-alkylvinyliques, renfermant un radical alkyle en C₁ à C₅, d'acides carboxyliques en C₁ à C₅, d'esters allyliques, d'esters vinyliques d'acides carboxyliques ramifiés en alpha ayant de 5 à 12 atomes de carbone, d'esters acryliques et méthacryliques d'alcools en C₁ à C₁₈.

2. Utilisation selon la revendication 1, **caractérisée en ce que** l'on utilise des homopolymères ou des copolymères d'acétate de vinyle partiellement ou totalement hydrolysés, présentant un degré d'hydrolyse de 75 à 100 % en moles, lesquels sont acétalisés avec des aldéhydes aliphatiques ou aromatiques, avec un degré d'acétalisation de 0,5 à 100 % en moles.

3. Utilisation selon la revendication 1 ou 2, **caractérisée en ce que** les aldéhydes aliphatiques ou aromatiques sont substitués par un ou plusieurs substituants parmi le groupe constitué de radicaux hydroxy, carboxy et sulfonate, ammonium et aldéhyde.

4. Utilisation selon les revendications 1 à 3, **caractérisée en ce que** les homopolymères ou copolymères d'acétate de vinyle partiellement ou totalement hydrolysés sont acétalisés avec un ou plusieurs aldéhydes parmi le groupe constitué du formaldéhyde, de l'acétaldéhyde, du benzaldéhyde, de l'acide glyoxylique et du glycéraldéhyde.

5. Utilisation selon les revendications 1 à 4, **caractérisée en ce que** les copolymères d'acétate de vinyle partiellement ou totalement hydrolysés renferment également, en plus de motifs acétate de vinyle, des motifs comonomères qui sont dérivés d'un ou de plusieurs comonomères choisis parmi le groupe constitué de l'acétate d'isopropényle, d'esters vinyliques d'acides carboxyliques ramifiés en alpha ayant de 9 à 11 atomes de carbone, et de (méth)acrylate d'alkyle en C₁ à C₁₀.

6. Utilisation selon la revendication 5, **caractérisée en ce que** la proportion des motifs comonomères mentionnés est, dans chaque cas, de 0,3 à 15 % en poids, dans chaque cas par rapport au poids total du copolymère d'acétate de vinyle partiellement ou totalement hydrolysé.

7. Utilisation selon la revendication 6, **caractérisée en ce que** les épaississants sont obtenus par acétalisation de copolymères d'acétate de vinyle partiellement ou totalement hydrolysés, renfermant, dans chaque cas, de 0,3 à 15 % en poids d'acétate d'isopropényle, ou d'esters vinyliques d'acides carboxyliques ramifiés en alpha ayant de 9 à 11 atomes de carbone ou de l'acrylate de méthyle, d'éthyle, de butyle ou de 2-éthylhexyle et du méthacrylate de 2-éthylhexyle, ou de copolymères d'acétate de vinyle partiellement ou totalement hydrolysés renfermant de 0,3 à 15 % en poids de motifs acétate d'isopropényle et de 0,3 à 15 % en poids d'esters vinyliques d'acides carboxyliques ramifiés en alpha ayant de 9 à 11 atomes de carbone,
ou de copolymères d'acétate de vinyle partiellement ou totalement hydrolysés renfermant de 0,5 à 6 % en poids d'acétate d'isopropényle et de 0,5 à 6 % en poids d'esters vinyliques d'acides carboxyliques ramifiés en alpha ayant 10 atomes de carbone, et de 0,5 à 6 % en poids d'acrylate de méthyle,
ou de copolymères d'acétate de vinyle partiellement ou totalement hydrolysés renfermant de 0,5 à 6 % en poids d'acétate d'isopropényle et de 0,5 à 6 % en poids de méthacrylate de 2-éthylhexyle, et de 0,5 à 6 % en poids d'acrylate de méthyle.

8. Utilisation selon les revendications 1 à 7, **caractérisée en ce que** les épaississants sont utilisés sous forme d'une solution aqueuse, ou sous forme d'une poudre, ou en tant qu'additif dans des dispersions polymères aqueuses ou dans des poudres polymères redispersables dans l'eau, en une quantité de 0,01 à 20 % en poids d'épaississants (solide), par rapport au poids total de la composition à épaissir, dans des cosmétiques, dans le secteur pharmaceutique, dans des émulsions siliconées à base d'eau, dans des huiles siliconées, dans des compositions de revêtements, dans des compositions adhésives ou dans des applications en construction.

9. Utilisation selon la revendication 8 dans des applications en construction avec des compositions à prise hydraulique et à prise non hydraulique.

10. Utilisation selon la revendication 9 dans des adhésifs de construction cimentaires, des mortiers secs cimentaires, des compositions nivelantes cimentaires, des enduits cimentaires, des adhésifs cimentaires d'isolation thermique totale et des boues d'étanchéité cimentaires.

11. Utilisation selon la revendication 9 dans des mastics cimentaires, des crépis, des adhésifs pour carrelage et des adhésifs d'isolation thermique totale.

12. Utilisation selon la revendication 11, dans des compositions contenant du gypse.

13. Utilisation selon la revendication 12, dans des crépis au gypse et des mastics au gypse.

14. Utilisation selon les revendications 9 à 13, en mélange avec des poudres de redispersion redispersables dans l'eau.
